(19)

Europäisches Patentamt
European Patent Office
Office européen des brevets

(11) **EP 4 738 464 A1**

(12) **EUROPEAN PATENT APPLICATION**

(43) Date of publication:
06.05.2026 Bulletin 2026/19

(21) Application number: 25210600.0

(22) Date of filing: 23.10.2025

(51) International Patent Classification (IPC):
$H01M\ 4/36^{(2006.01)}$ $H01M\ 4/133^{(2010.01)}$
$H01M\ 4/134^{(2010.01)}$ $H01M\ 4/38^{(2006.01)}$
$H01M\ 4/62^{(2006.01)}$ $H01M\ 4/04^{(2006.01)}$
$H01M\ 4/587^{(2010.01)}$

(52) Cooperative Patent Classification (CPC):
H01M 4/364; H01M 4/0404; H01M 4/133;
H01M 4/134; H01M 4/386; H01M 4/587;
H01M 4/622; H01M 4/625

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 29.10.2024 KR 20240149715

(71) Applicant: SAMSUNG SDI CO., LTD.
Yongin-si, Gyeonggi-do 17084 (KR)

(72) Inventors:
• YOO, Jungkeun
  Seoul (KR)
• YOON, Jihee
  Gyeongsangnam-do (KR)
• SEOL, Jongheon
  Gyeonggi-do (KR)

• JEON, SEONGHO
  Gyeonggi-do (KR)
• KIM, Teukyoung
  Daegu (KR)
• SHIN, Donghyun
  Gyeonggi-do (KR)
• HWANG, Taehyun
  Gyeonggi-do (KR)
• KIM, Jaehong
  Gyeonggi-do (KR)
• KIM, MINJAE
  Gyeonggi-do (KR)
• NAM, JungHyun
  Gyeonggi-do (KR)
• KIM, HO
  Gyeonggi-do (KR)

(74) Representative: Michalski Hüttermann & Partner
Patentanwälte mbB
Kaistraße 16A
40221 Düsseldorf (DE)

(54) **NEGATIVE ELECTRODE SLURRY, MANUFACTURING METHOD OF NEGATIVE ELECTRODE SLURRY AND NEGATIVE ELECTRODE FOR RECHARGEABLE LITHIUM BATTERY**

(57) The present disclosure relates to a negative electrode slurry, a manufacturing method of the negative electrode slurry, and a negative electrode manufactured using the negative electrode slurry. The negative electrode slurry includes a first negative electrode active material including a silicon composite, and a second negative electrode active material including a carbon-based material. The silicon composite includes a silicon-based active material and a one-dimensional carbon nanostructure. The one-dimensional carbon nanostructure is fixed in a dispersed form on a surface of the silicon-based active material. The second negative electrode active material is a carbon-based material different from the one-dimensional carbon nanostructure.

FIG. 1

# EP 4 738 464 A1

**Description**

CROSS-REFERENCE TO RELATED APPLICATIONS

This U.S. non-provisional patent application claims priority under 35 U.S.C. § 119 of Korean Patent Application No. 10-2024-0149715, filed on October 29, 2024, the entire contents of which are hereby incorporated by reference.

BACKGROUND

The present disclosure herein relates to a negative electrode slurry, a manufacturing method of the negative electrode slurry, and a negative electrode for a rechargeable lithium battery.

With increasing spread of electronic devices that use batteries, such as, e.g., mobile phones, laptop computers, electric vehicles, and the like, the demand for rechargeable batteries with high energy density and high capacity is increasing. Accordingly, improving the performance of rechargeable lithium batteries may be advantageous.

A rechargeable lithium battery typically includes a positive electrode and a negative electrode including active materials capable of intercalation and deintercalation of lithium ions, and an electrolyte. The rechargeable lithium battery produces electrical energy through the oxidation and reduction reactions while lithium ions are intercalated into and deintercalated from the positive electrode and negative electrode.

SUMMARY

Examples of the present disclosure include a negative electrode slurry for forming a negative electrode active material layer having high density and conductivity, and a manufacturing method of the negative electrode slurry.

Another example of the present disclosure includes a negative electrode configured to improve the performance of a rechargeable lithium battery.

Another example of the present disclosure includes a rechargeable lithium battery including the negative electrode and having desired or improved life characteristics and energy efficiency.

A negative electrode slurry according to an example concept of the present disclosure may include a first negative electrode active material including a silicon composite, and a second negative electrode active material which is or includes a carbon-based material. The silicon composite may include a silicon-based active material and a one-dimensional carbon nanostructure, the one-dimensional carbon nanostructure may be fixed in a dispersed form on a surface of the silicon-based active material, and the second negative electrode active material may be or include a carbon-based material that is different from the one-dimensional carbon nanostructure.

A method of manufacturing a negative electrode slurry according to another example of the present disclosure may include preparing a first negative electrode active material precursor including a silicon-based active material, a one-dimensional carbon nanostructure, and a thermoplastic binder, pulverizing the first negative electrode active material precursor by, e.g., a ball mill, to prepare a first negative electrode active material, and mixing the first negative electrode active material and a second negative electrode active material. The first negative electrode active material may be or include a silicon composite in which the one-dimensional carbon nanostructure is fixed on a surface of the silicon-based active material via the thermoplastic binder, and the second negative electrode active material may be or include a carbon-based material that is different from the one-dimensional carbon nanostructure.

A negative electrode according to another example of the present disclosure may include a negative electrode current collector, and a negative electrode active material layer located on the negative electrode current collector. The negative electrode active material layer may include a first negative electrode active material including a silicon composite, and a second negative electrode active material which is or includes a carbon-based material. The silicon composite may include a silicon-based active material and a one-dimensional carbon nanostructure. The one-dimensional carbon nanostructure may be fixed in a dispersed form on a surface of the silicon-based active material, and the second negative electrode active material may be or include a carbon-based material that is different from the one-dimensional carbon nanostructure.

BRIEF DESCRIPTION OF THE FIGURES

FIG. 1 is a conceptual diagram illustrating a rechargeable lithium battery according to example embodiments of the present disclosure.
FIG. 2 to FIG. 5 are schematic diagrams illustrating rechargeable lithium batteries according to example embodiments, in which FIG. 2 may be a cylindrical battery, FIG. 3 may be a prismatic battery, and FIG. 4 and FIG. 5 may be pouch-type batteries.

FIG. 6 is a cross-sectional view of a negative electrode for a rechargeable lithium battery according to example embodiments of the present disclosure.

FIG. 7 is a cross-sectional view of a negative electrode active material layer according to an example embodiment of the present disclosure.

FIG. 8 is a cross-sectional view of a negative electrode active material layer according to Comparative Example 1 of the present disclosure.

FIG. 9 is a cross-sectional view of a negative electrode active material layer according to Comparative Example 2 of the present disclosure.

FIG. 10 is a diagram illustrating a first negative electrode active material according to an example embodiment of the present disclosure.

FIG. 11 is a diagram illustrating a first negative electrode active material according to Comparative Example 2 of the present disclosure.

FIG. 12 is a flowchart showing a method of manufacturing a negative electrode slurry according to an example embodiment of the present disclosure.

FIG. 13 is a graph showing the capacity retention rate of rechargeable lithium batteries according to Examples and Comparative Examples of the present disclosure.

Figure 14 shows photographs of negative electrodes manufactured according to Examples and Comparative Examples of the present disclosure.

DETAILED DESCRIPTION

In order to sufficiently understand the configuration and effect of the present disclosure, example embodiments of the present disclosure is described with reference to the accompanying drawings. It should be noted, however, that the present disclosure is not limited to the example embodiments, and may be implemented in various forms. Rather, the example embodiments are provided only to disclose the present disclosure completely and let those skilled in the art fully know the scope of the present disclosure.

In the specification, when an element is referred to as being "on" another element, the element may be formed "directly on" the other element, or intervening elements may be disposed therebetween. In the drawings, thicknesses of components are exaggerated for effectively describing the technical contents. Like reference numerals or symbols refer to like elements throughout.

Examples embodiments described herein are described with reference to cross-sectional and/or plan views, which are ideal illustrations of the present disclosure. In the drawings, the thicknesses of the layers and regions are exaggerated for the effective description of the technical contents. Accordingly, the regions illustrated in the drawings have a schematic nature, and the shapes of the regions illustrated , in the drawings are intended to illustrate specific forms of regions of a device and are not intended to limit the scope of the disclosure. Although the terms first, second, third, and the like, have been used to describe various components in various example embodiments of the specification, the components may not be limited by the terms. The terms are only used to distinguish one component from another. Examples embodiments described and illustrated herein also include complementary embodiments thereof.

The terminology used herein is intended to describe embodiments and is not intended to limit the present disclosure. In the specification, the singular form includes the plural form unless For example stated otherwise. The terms "comprises" and/or "comprising" as used in the specification do not exclude the presence or addition of one or more other components.

As used herein, the term "combination thereof" may refer to a mixture, a stack, a composite, a copolymer, an alloy, a blend, or a reaction product.

Unless otherwise specially defined in this description, a particle diameter may be an average particle diameter. Also, a particle diameter indicates an average particle diameter (D50), which refers to the diameter of particles at a cumulative volume of about 50 vol% in particle size distribution. The average particle diameter (D50) may be measured by a method known to those skilled in the art, for example, by a particle size analyzer, or by using a transmission electron microscope (TEM) image or a scanning electron microscope (SEM) image. Alternatively, the average particle diameter may be measured by a measurement device using dynamic light-scattering, wherein data analysis is conducted to count the number of particles for each particle size range, and an average particle diameter (D50) value may then be obtained through calculation. Also, a laser diffraction method may be utilized to measure the average particle diameter. In the laser diffraction method, target particles are dispersed in a dispersion medium, then introduced into a commercial laser diffraction particle diameter measurement instrument (e.g., MT3000 of Microtrac), and irradiated to ultrasonic waves of about 28 kHz at an output of about 60 W, and the average particle diameter (D50) based on about 50% of particle diameter distribution may be calculated in the measurement instrument.

When the terms "about" or "substantially" are used in this specification in connection with a numerical value, it is intended that the associated numerical value include a tolerance of $\pm 10\%$ around the stated numerical value. When ranges are specified, the range includes all values therebetween such as increments of 0.1%.

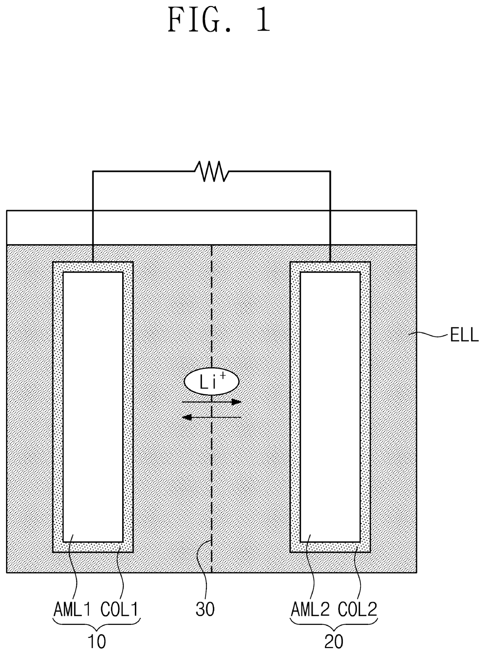

FIG. 1 is a conceptual diagram illustrating a rechargeable lithium battery according to example embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be disposed between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be immersed in the electrolyte solution ELL.

The electrolyte solution ELL may be or include a medium for transferring lithium ions between the positive electrode 10 and the negative electrode 20. In the electrolyte solution ELL, the lithium ions may move through the separator 30 toward the positive electrode 10 or the negative electrode 20.

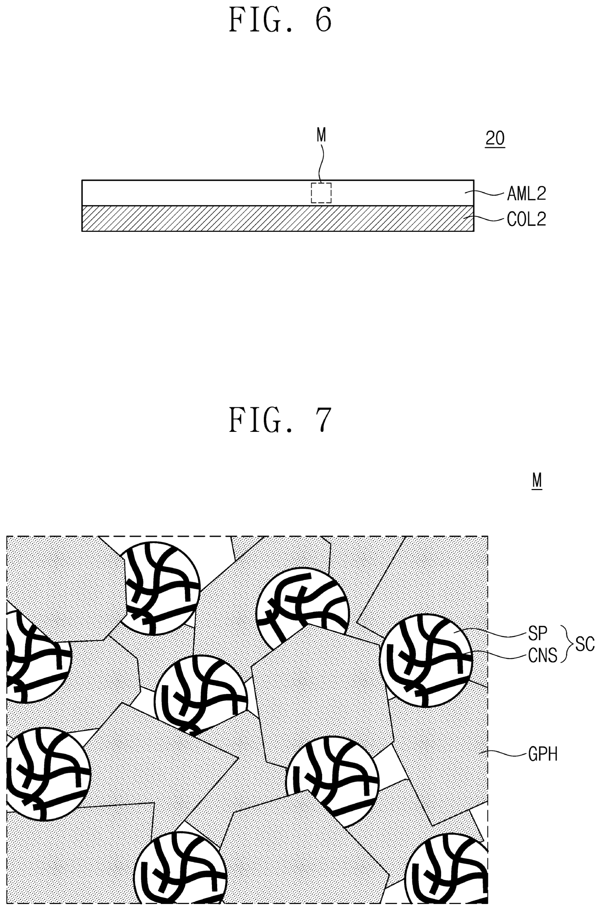

The negative electrode 20 is explained below with reference to FIG. 6.

## Positive Electrode 10

The positive electrode 10 for a rechargeable lithium battery may include a current collector COL1 and a positive electrode active material layer AML1 on the current collector COL1. The positive electrode active material layer AML1 may include a positive electrode active material, and may further include a binder and/or a conductive material.

For example, the positive electrode 10 may further include an additive that may be configured as a sacrificial positive electrode.

An amount of the positive electrode active material may be in a range of $\geq 90$ wt% to $\leq 99.5$ wt% based on 100 wt% of the positive electrode active material layer AML1. The amounts of the binder and the conductive material may be in a range of $\geq 0.5$ wt% to $\leq 5$ wt%, respectively, based on 100 wt% of the positive electrode active material layer AML1.

The binder is configured to attach the positive electrode active material particles to each other, and to attach the positive electrode active material to the current collector COL1. Typical examples of the binder may include at least one of polyvinyl alcohol, carboxymethyl cellulose, hydroxypropyl cellulose, diacetyl cellulose, polyvinyl chloride, carboxylated polyvinyl chloride, polyvinyl fluoride, a polymer including ethylene oxide, polyvinylpyrrolidone, polyurethane, polytetrafluoroethylene, polyvinylidene fluoride, polyethylene, polypropylene, styrene-butadiene rubber, (meth)acrylated styrene-butadiene rubber, an epoxy resin, a (meth)acrylic resin, a polyester resin, nylon, and the like, as non-limiting examples.

The conductive material may be included to impart conductivity to the electrode. Any material that does not cause substantial chemical change and that conducts electrons may be included in the battery. Examples of the conductive material may include a carbon-based material such as or including at least one of natural graphite, artificial graphite, carbon black, acetylene black, Ketjen black, carbon fiber, carbon nanofiber, and carbon nanotube; a metal-based material including at least one of copper, nickel, aluminum, silver, or the like, in a form of a metal powder or a metal fiber; a conductive polymer such as a polyphenylene derivative; or a mixture thereof.

Al may be included as the current collector COL1, but the current collector is not limited thereto.

## Positive Electrode Active Material

The positive electrode active material in the positive electrode active material layer AML1 may include a compound (lithiated intercalation compound) that is capable of intercalating and deintercalating lithium. For example, at least one of a composite oxide of lithium and a metal such as or including at least one of cobalt, manganese, nickel, and a combination thereof may be included.

The composite oxide may be or include a lithium transition metal composite oxide. Examples of the lithium transition metal composite oxide may include at least one of lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the chemical formulas below may be included. $Li_aA_{1-b}X_bO_{2-c}D_c$ ($0.90 \leq a \leq 1.8$, $0 \leq b \leq 0.5$, and $0 \leq c \leq 0.05$); $Li_aMn_{2-b}X_bO_{4-c}D_c$ ($0.90 \leq a \leq 1.8$, $0 \leq b \leq 0.5$, and $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ ($0.90 \leq a \leq 1.8$ and $0.001 \leq b \leq 0.1$); $Li_aCoG_bO_2$ ($0.90 \leq a \leq 1.8$ and $0.001 \leq b \leq 0.1$); $Li_aMn_{1-b}G_bO_2$ ($0.90 \leq a \leq 1.8$ and $0.001 \leq b \leq 0.1$); $Li_aMn_2G_bO_4$ ($0.90 \leq a \leq 1.8$ and $0.001 \leq b \leq 0.1$); $Li_aMn_{1-g}G_gPO_4$ ($0.90 \leq a \leq 1.8$ and $0 \leq g \leq 0.5$); $Li_{(3-f)}Fe_2(PO_4)_3$ ($0 \leq f \leq 2$); or $Li_aFePO_4$ ($0.90 \leq a \leq 1.8$).

In the above chemical formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a

combination thereof; and $L^1$ is or includes at least one of Mn, Al, or a combination thereof.

The positive electrode active material may be or include, for example, a high nickel-based positive electrode active material having a nickel content of about 80 mol% or more, about 85 mol% or more, about 90 mol% or more, about 91 mol% or more, or about 94 mol% or more and about 99 mol% or less based on 100 mol% of the metal excluding lithium in the lithium transition metal composite oxide. The high-nickel-based positive electrode active material may be capable of realizing high capacity, and may be applied to a high-capacity, high-density rechargeable lithium battery.

**Separator 30**

Depending on the type of the rechargeable lithium battery, the separator 30 may be present between the positive electrode 10 and the negative electrode 20. The separator 30 may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof on one surface, or on both surfaces, of the porous substrate.

The porous substrate may be or include a polymer film formed of or including any one polymer such as at least one of polyolefin such as polyethylene and polypropylene, polyester such as at least one of polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles such as or including at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or a coating layer including an organic material and a coating layer including an inorganic material may be stacked.

**Electrolyte Solution ELL**

An electrolyte solution ELL for a rechargeable lithium battery may include a non-aqueous organic solvent and a lithium salt.

The non-aqueous organic solvent may be configured as a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like. The aprotic solvent may include at least one of nitriles such as R-CN (wherein R is a C2 to C20 linear, branched, or cyclic hydrocarbon group, and may include a double bond, an aromatic ring, or an ether bond); amides such as dimethylformamide; dioxolanes such as 1,3-dioxolane, 1,4-dioxolane, and the like; sulfolanes, and the like.

The non-aqueous organic solvents may be included alone or in combination of two or more solvents.

In addition, when using a carbonate-based solvent, a cyclic carbonate and a chain carbonate may be mixed, and the cyclic carbonate and the chain carbonate may be mixed in a volume ratio in a range of about 1:1 to about 1:9.

The lithium salt dissolved in the organic solvent is configured to supply lithium ions in a battery, to enable a basic operation of a rechargeable lithium battery, and to improve transportation of the lithium ions between positive and negative electrodes. Examples of the lithium salt include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (where x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

**Negative Electrode Active Material**

FIG. 6 is a cross-sectional view of a negative electrode 20 according to example embodiments of the present disclosure. Referring to FIG. 6, a negative electrode 20 for a rechargeable lithium battery includes a current collector COL2, and a negative electrode active material layer AML2 on the current collector COL2. The negative electrode active material layer AML2 includes a negative electrode active material, and may further include a binder and/or a conductive material.

FIG. 7 is a schematic diagram showing an enlarged cross-section of a section "M" in the negative electrode active material layer AML2 of FIG. 6. Referring to FIG. 7, the negative electrode active material layer AML2 may include a first negative electrode active material SC and a second negative electrode active material GPH.

The first negative electrode active material SC may include a silicon composite. The silicon composite may include a silicon-based active material SP and a one-dimensional carbon nanostructure CNS.

The average particle diameter (D50) of the first negative electrode active material SC may be, for example, in a range of $\geq 1\,\mu m$ to $\leq 30\,\mu m$, $\geq 1\,\mu m$ to $\leq 25\,\mu m$, $\geq 5\,\mu m$ to $\leq 25\,\mu m$, $\geq 5\,\mu m$ to $\leq 20\,\mu m$, or $\geq 5\,\mu m$ to $\leq 15\,\mu m$. When the average particle diameter of the first negative electrode active material SC deviates from the above range, coating quality may be deteriorated when forming an active material layer on the current collector COL2. When the average particle diameter of the first negative electrode active material SC is within the above range, volume expansion problem occurring during charge and discharge may be alleviated, and the disconnection of a conductive path due to particle crushing during charge and discharge may be reduced or prevented.

The silicon-based active material SP may include at least one of silicon, a silicon-carbon composite, $SiO_x$ ($0 < x < 2$), a Si-Q alloy (where Q is or includes at least one of an alkali metal, an alkaline earth metal, a Group 13 element, a Group 14 element, a Group 15 element, a Group 16 element, a transition metal, a rare earth element, and a combination thereof, but is not Si), or a combination thereof.

The silicon-carbon composite may be or include, for example, a silicon-carbon composite including a core including crystalline carbon and silicon particles, and an amorphous carbon coating layer on the surface of the core. The crystalline carbon may be or include artificial graphite, natural graphite, or a combination thereof. The amorphous carbon precursor may be or include at least one of a coal-based pitch, a mesophase pitch, a petroleum-based pitch, a coal-based oil, a petroleum-based heavy oil, or a polymer resin such as a phenol resin, a furan resin, and a polyimide resin. For example, the content of silicon may be in a range of $\geq 10$ wt% to $\leq 50$ wt% relative to the total weight of the silicon-carbon composite. In addition, the content of the crystalline carbon may be in a range of $\geq 10$ wt% to $\leq 70$ wt% relative to the total weight of the silicon-carbon composite, and the content of the amorphous carbon may be in a range of $\geq 20$ wt% to $\leq 40$ wt% relative to the total weight of the silicon-carbon composite. In addition, the thickness of the amorphous carbon coating layer may be in a range of $\geq 5$ nm to $\leq 100$ nm. The average particle diameter (D50) of the silicon particles may be in a range of $\geq 10$ nm to $\leq 20\,\mu m$, or $\geq 10$ nm to $\leq 200$ nm. The silicon particles may exist in an oxidized form, and in this case, the atomic content ratio of Si:O in the silicon particles, indicating the degree of oxidation may be in a range of about 99:1 to about 33:66 by weight ratio. The silicon particles may be or include $SiO_x$ particles, and for example, the range of x in $SiO_x$ may be greater than 0 and less than about 2. In the specification, unless otherwise defined, the average particle diameter (D50) indicates the diameter of particles having a cumulative volume of 50 vol% in particle size distribution.

The one-dimensional carbon nanostructure CNS may be fixed in a dispersed form on the surface of the silicon-based active material SP. The one-dimensional carbon nanostructure may indicate a material having a linear structure in which carbon is elongated in one direction. When the one-dimensional carbon nanostructure is fixed in a dispersed form on the surface of the silicon-based active material, the volume expansion problem of silicon may be improved, and the low conductivity of silicon may be improved. In addition, capacity may be better than the capacity when the entire surface of the silicon-based active material is coated with carbon.

The one-dimensional carbon nanostructure may include, for example, at least one of carbon nanotubes (CNTs), carbon nanofibers (CNFs), graphene nanoribbons (GNRs), carbon nano belts, carbon nano rods, or a combination thereof.

The content of the one-dimensional carbon nanostructure may be, for example, in a range of $\geq 0.05$ wt% to $\leq 3$ wt%, $\geq 0.05$ wt% to $\leq 2$ wt%, $\geq 0.05$ wt% to $\leq 1.5$ wt%, or $\geq 0.1$ wt% to $\leq 1$ wt% based on the total weight of the first negative electrode active material. When the one-dimensional carbon nanostructure CNT satisfies the content range, the capacity-related advantages of silicon may be sufficiently exhibited while alleviating the volume expansion problem.

The silicon composite may further include a thermoplastic binder. The one-dimensional carbon nanostructure CNT may be fixed on the surface of the silicon-based active material via the thermoplastic binder. The thermoplastic binder may include at least one of a phenoxy resin, polypropylene (PP), polyvinylidene fluoride (PVDF), polyvinylidene chloride (PVC), or a combination thereof. However, any material capable of fixing the one-dimensional carbon nanostructure CNT onto the surface of the silicon-based active material may be included in addition to the thermoplastic binder.

The content of the thermoplastic binder may be, for example, in a range of $\geq 0.05$ wt% to $\leq 3$ wt%, $\geq 0.05$ wt% to $\leq 2$ wt%, $\geq 0.05$ wt% to $\leq 1.5$ wt%, or $\geq 0.1$ wt% to $\leq 1$ wt% based on the total weight of the first negative electrode active material. When the thermoplastic binder satisfies the above range, the one-dimensional carbon nanostructure CNT may be sufficiently fixed on the silicon-based active material SP, and may not affect the conductivity of the first negative electrode active material.

According to an example embodiment, the carbon nanotube may be fixed on the surface of the silicon-based active material SP via a phenoxy resin, which is a type of the thermoplastic binder.

The carbon nanotube may be or include at least one of a single-walled carbon nanotube, a multi-walled carbon nanotube, or a combination thereof.

The phenoxy resin may be or include a thermoplastic resin having a repeating unit formed by the condensation reaction of bisphenol and epichlorohydrin.

The second negative electrode active material GPH may be or include a carbon-based material, but may be or include a carbon-based material that is different from the one-dimensional carbon nanostructure CNT of the first negative electrode active material. By using a carbon-based material that is different from the second negative electrode active material GPH, the efficiency of charge and discharge may be increased.

The second negative electrode active material GPH may include, for example, at least one of crystalline carbon, amorphous carbon, or a combination thereof. Examples of the crystalline carbon include graphite such as or including at least one of amorphous, plate-like, flake-like, spherical, or fiber-like natural graphite or artificial graphite, and examples of the amorphous carbon include at least one of soft carbon or hard carbon, mesophase pitch carbide, fired coke, and the like.

In an example embodiment, the second negative electrode active material GPH may include graphite. The graphite may be or include artificial graphite, natural graphite, or a mixture thereof.

The one-dimensional carbon nanostructure CNT may be omitted on the surface of the second negative electrode active material GPH to expose the carbon-based material. For example, the one-dimensional carbon nanostructure CNT may be fixed only to the surface of the first negative electrode active material SC, and may not be fixed to the surface of the second negative electrode active material GPH. However, it is not excluded that the one-dimensional carbon nanostructure CNT fixed to the surface of the first negative electrode active material SC and the surface of the second negative electrode active material GPH come into contact, at a part where the first negative electrode active material SC and the second negative electrode active material GPH come into contact. The one-dimensional carbon nanostructure CNT may not be distributed on the surface of the second negative electrode active material GPH having conductivity, but may be fixed only to the surface of the silicon-based active material, thereby improving the conductivity of the silicon-based active material and improving the electrical network between the active materials.

In the negative electrode slurry or the negative electrode active material layer of the manufactured negative electrode, the weight ratio of the first negative electrode active material SC and the second negative electrode active material GPH may be, for example, in a range of about 1:50 to about 1:5, about 1:40 to about 1:5, or about 1:30 to about 1:5. When the weight ratio of the first negative electrode active material and the second negative electrode active material satisfies the above range, desired or improved energy density and electrical conductivity may be achieved.

## Negative Electrode Slurry and Manufacturing Method Thereof

Referring again to FIG. 6, the negative electrode 20 for a rechargeable lithium battery includes a negative electrode active material layer AML2 positioned on a current collector COL2. In this case, the negative electrode active material layer AML2 may be formed by applying a negative electrode slurry on the current collector COL2.

The negative electrode slurry includes a first negative electrode active material SC and a second negative electrode active material GPH, and may further include at least one of a conductive material, a dispersant, a binder, or a combination thereof.

The binder is configured to attach the negative electrode active material particles to each other, and to attach the negative electrode active material to the current collector COL2. The binder may be or include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be or include at least one of styrene-butadiene rubber, (meth)acrylated styrene-butadiene rubber, (meth)acrylonitrile-butadiene rubber, (meth)acrylic rubber, butyl rubber, fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is included as the negative electrode binder, a cellulose series compound capable of imparting viscosity may be further included. The cellulose series compound may be included by mixing one or more of carboxymethyl cellulose, hydroxypropylmethyl cellulose, methyl cellulose, or alkali metal salts thereof. The alkali metal may be or include at least one of Na, K, or Li.

The dry binder may be or include a polymer material capable of being fiberized, for example, at least one of polytetrafluoroethylene, polyvinylidene fluoride, a polyvinylidene fluoride-hexafluoropropylene copolymer, polyethylene oxide, or a combination thereof.

The conductive material is included to provide conductivity to the electrode, and any material that does not cause a substantial chemical change, and that is electronically conductive, may be included in the battery to be formed. Examples include carbon-based materials such as at least one of natural graphite, artificial graphite, carbon black, acetylene black, Ketjen black, carbon fiber, carbon nanofiber, and carbon nanotube; metal-based materials including at least one of copper, nickel, aluminum, silver, or the like, and in the form of metal powder or metal fiber; conductive polymers such as polyphenylene derivatives; or mixtures thereof.

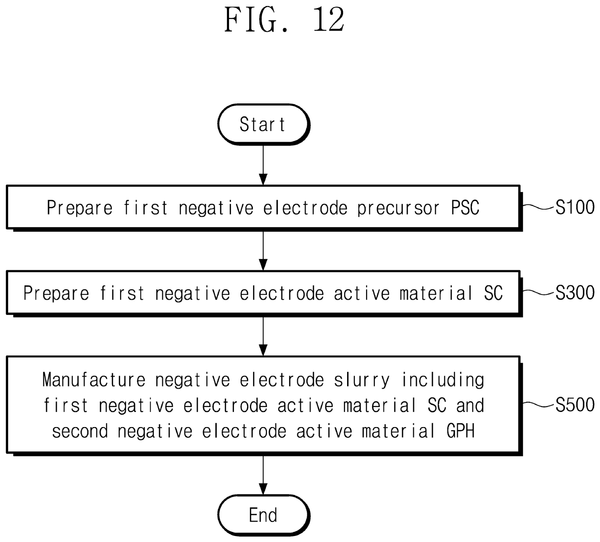

FIG. 12 is a flowchart describing a method of manufacturing a negative electrode slurry, according to example embodiments of the present disclosure.

Referring to FIG. 12, a method of manufacturing a negative electrode slurry according to example embodiments of the present disclosure may include a step of preparing a first negative electrode active material precursor PSC including a silicon-based active material SP, a one-dimensional carbon nanostructure CNT, and a thermoplastic binder (S100); a step of pulverizing the first negative electrode active material precursor PSC by, e.g., a ball mill, to prepare a first negative electrode active material SC (S300); and a step of mixing the first negative electrode active material SC and the second negative electrode active material GPH (S500). In the example manufacturing method described below, the first negative electrode active material SC and the second negative electrode active material GPH, and the like, are the same as the first negative electrode active material and the second negative electrode active material described above.

The first negative electrode active material precursor PSC may include at least one of a silicon-based active material SP, a one-dimensional carbon nanostructure CNT, and a thermoplastic binder (S100).

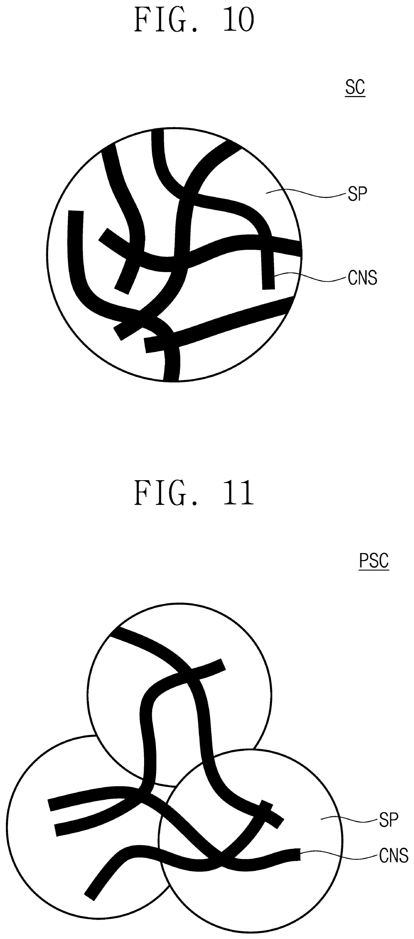

FIGS. 10 and 11 are schematic diagrams illustrating the first negative electrode active material SC and the first negative electrode active material precursor PSC. Referring to FIG. 11, the first negative electrode active material precursor may be in the form of multiple silicon composites agglomerated by the one-dimensional carbon nanostructure CNS and the thermoplastic binder.

The first negative electrode active material SC may be prepared by pulverizing the first negative electrode active material precursor PSC using, e.g., a ball mill (S300). When the first negative electrode active material precursor PSC is pulverized by, e.g., a ball mill, particles having a shape similar to the first negative electrode active material SC of FIG. 10 may be formed.

The ball mill may indicate equipment that forms fine powder or pulverizes materials. When pulverizing a specific material using a ball mill, the material to be pulverized and balls may be placed together and pulverized by collision or friction. The ball mill may be classified into three-dimensional (3D) or two-dimensional (2D) depending on the movement method of the equipment. According to an example embodiment, the ball mill may be performed using 3D equipment, 2D equipment, or a combination thereof.

The balls included in the ball mill may be made of or include, for example, at least one of zirconia, alumina, stainless steel, carbon steel, ceramic, high-density polyurethane, or the like.

A ball size for the pulverizing may be, for example, in a range of $\geq 0.1$ mm to $\leq 30$ mm, $\geq 1$ mm to $\leq 30$ mm, $\geq 1$ mm to $\leq 20$ mm, or $\geq 1$ mm to $\leq 15$ mm. In this case, the ball size may indicate the diameter of balls. In addition, the pulverizing may use single size balls, but may also use a mixture of balls of various sizes.

The pulverizing may be performed for a duration in a range of, for example, $\geq 30$ minutes to $\leq 48$ hours, $\geq 1$ hour to $\leq 36$ hours, or $\geq 2$ hours to $\leq 24$ hours.

During the pulverizing, the balls and the first negative electrode active material precursor PSC may be added at a weight ratio in a range of, for example, about 2:1 to about 8:1, about 3:1 to about 7:1, or about 4:1 to about 6:1.

The ball size, the pulverizing time, and the weight ratio of the balls and the first negative electrode active material precursor are required to satisfy the above ranges so that the first negative electrode active material precursor PSC may be pulverized into the first negative electrode active material SC, and the first negative electrode active material SC may have a complete shape without being split or separated.

The pulverizing speed may be in a range of, for example, $\geq 100$ rpm to $\leq 500$ rpm, $\geq 100$ rpm to $\leq 400$ rpm, or $\geq 100$ rpm to $\leq 300$ rpm, but is not limited thereto as long as the pulverizing speed is a sufficient rotation speed that a person skilled in the art may select during milling.

When the first negative electrode active material SC is not prepared by a separate process, or the first negative electrode active material precursor PSC is included without pulverizing through a ball mill, the performance of the negative electrode may be deteriorated.

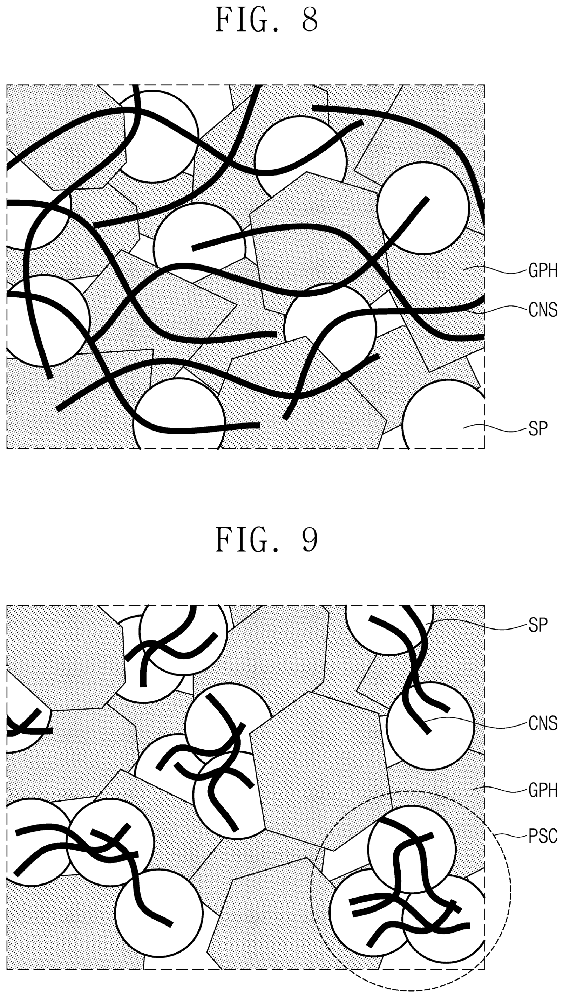

FIG. 8 is a cross-sectional view of a negative electrode active material layer in a case where the first negative electrode active material SC is not prepared through a separate process as in Comparative Example 1, but is prepared by simultaneously or contemporaneously mixing a silicon-based active material SP, a one-dimensional carbon nanostructure CNT, and a second negative electrode active material GPH. FIG. 9 is a cross-sectional view of a negative electrode active material layer in a case where the first negative electrode active material precursor PSC is included without pulverization through a ball mill as in Comparative Example 2.

Referring to FIGS. 8 and 9, when the first negative electrode active material SC is not prepared through a separate process, but is prepared by mixing at once, the second negative electrode active material GPH that has electrical conductivity also has one-dimensional carbon nanostructures CNTs distributed, so that the conductivity may decrease compared to an example embodiment of the present disclosure as in FIG. 7, even though having the same component. In addition, when the ball milling process is excluded as in FIG. 9, a first negative electrode active material precursor PSC state exists in the negative electrode.

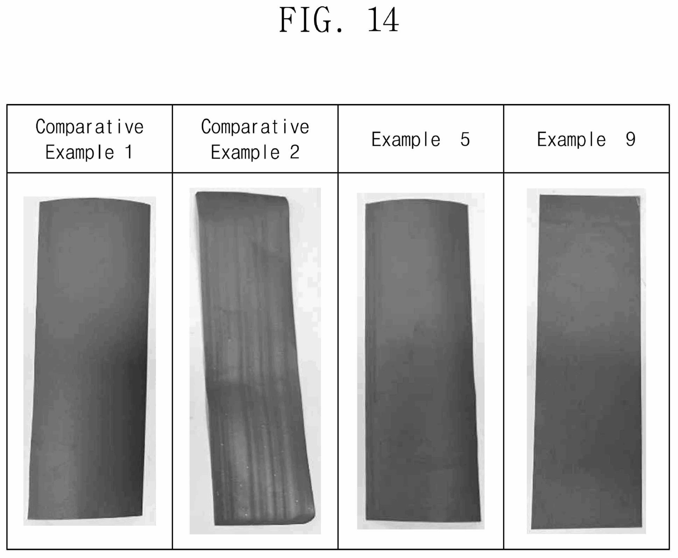

FIG. 14 shows photographs of the negative electrodes manufactured by the Examples and Comparative Examples of the present disclosure. Referring to FIG. 14, in the case of Comparative Example 2, where the first negative electrode active material precursor PSC was included without pulverization through a ball mill, it can be observed that scratch marks are formed on the surface of the negative electrode after a rolling process. The scratches may be formed due to the deterioration of coating quality caused by the first negative electrode active material precursor PSC in the form of an agglomerated lump.

The negative electrode slurry may be prepared by mixing the first negative electrode active material SC and the second negative electrode active material GPH (S500). In this case, the negative electrode slurry may further include at least one of a conductive material, a dispersant, a binder, or a combination thereof.

The conductive material on the negative electrode slurry may be in a range of, for example, $\geq 0.1$ wt% to $\leq 1$ wt%, $\geq 0.2$ wt% to $\leq 0.8$ wt%, or $\geq 0.3$ wt% to $\leq 0.6$ wt% relative to the total solid mass of the negative electrode slurry. When the conductive material satisfies the above range, side reactions with an electrolyte in a battery may be reduced, and the conductivity of the negative electrode may be improved.

The binder on the negative electrode slurry may be or include, for example, $\geq 0.5$ wt% to $\leq 3$ wt%, $\geq 1$ wt% to $\leq 2.5$ wt%, or $\geq 1.5$ wt% to $\leq 2$ wt% relative to the total solid mass of the negative electrode slurry. When the content of the binder satisfies the above range, the first negative electrode active material SC and the second negative electrode active material GPH may be properly bonded to the current collector. When the content of the binder exceeds the range, the conductivity of the manufactured negative electrode may be reduced.

The dispersant on the negative electrode slurry may be in a range of, for example, $\geq 0.01$ wt% to $\leq 0.1$ wt%, or $\geq 0.02$ wt% to $\leq 0.08$ wt%, based on the total solid mass of the negative electrode slurry, but is not limited thereto as long as the content may be added by a person skilled in the art when manufacturing the negative electrode slurry.

The first negative electrode active material SC on the negative electrode slurry may be in a range of, for example, $\geq 1$ wt% to $\leq 15$ wt%, $\geq 2$ wt% to $\leq 13$ wt%, or $\geq 3$ wt% to $\leq 10$ wt% based on the total solid mass of the negative electrode slurry. When the first negative electrode active material SC exceeds the above content, the structural stability of the negative electrode may be deteriorated due to volume expansion, or the like.

The weight ratio of the second negative electrode active material GPH on the negative electrode slurry may be in a range of, for example, $\geq 70$ wt% to $\leq 95$ wt%, $\geq 75$ wt% to $\leq 95$ wt%, or $\geq 80$ wt% to $\leq 95$ wt% relative to the total mass of the solid content of the negative electrode slurry. When the second negative electrode active material GPH exceeds the above range, the content of the first negative electrode active material may be relatively reduced, thereby reducing battery capacity.

The weight ratio of the first negative electrode active material SC to the second negative electrode active material GPH on the negative electrode slurry or the negative electrode active material layer of the negative electrode may be in a range of, for example, about 1:50 to about 1:5, about 1:40 to about 1:5, or about 1:30 to about 1:5. When the weight ratio of the first negative electrode active material and the second negative electrode active material satisfies the above range, desired or improved energy density and electrical conductivity may be achieved.

The amounts of the first negative electrode active material SC, the second negative electrode active material GPH, the conductive material, the binder, and the dispersant in the above-described negative electrode slurry are based on the total mass of the solid content of the negative electrode slurry, and may be substantially the same as the content of each material in the negative electrode active material layer manufactured with the negative electrode slurry.

## Negative Electrode 20

Referring again to FIGS. 6 and 7, the negative electrode 20 for a rechargeable lithium battery is positioned on a current collector COL2, and includes a negative electrode active material layer AML2. The negative electrode active material layer AML2 includes a first negative electrode active material SC and a second negative electrode active material GPH, and may further include a binder and/or a conductive material. For example, the first negative electrode active material SC, the second negative electrode active material GPH, the binder, and the conductive material, may be the same as described above.

The current collector COL2 may be or include at least one of a copper foil, a nickel foil, a stainless steel foil, a titanium foil, a nickel foam, a copper foam, a polymer substrate coated with a conductive metal, and a combination thereof.

### Rechargeable Lithium Battery

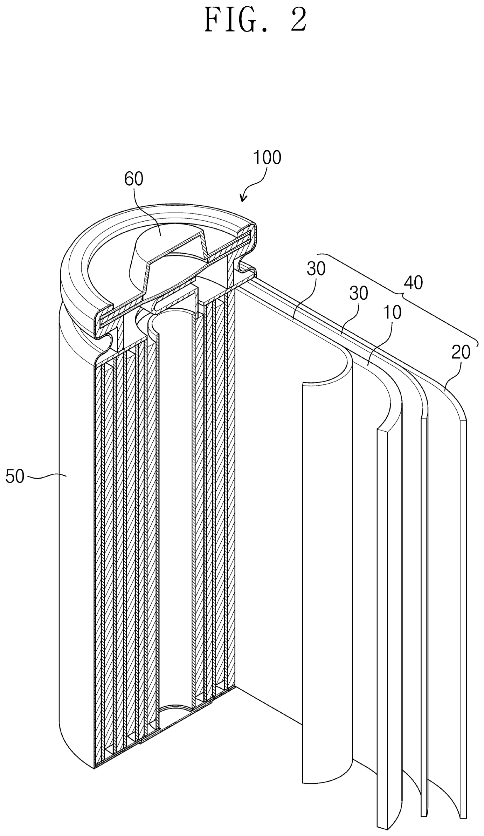

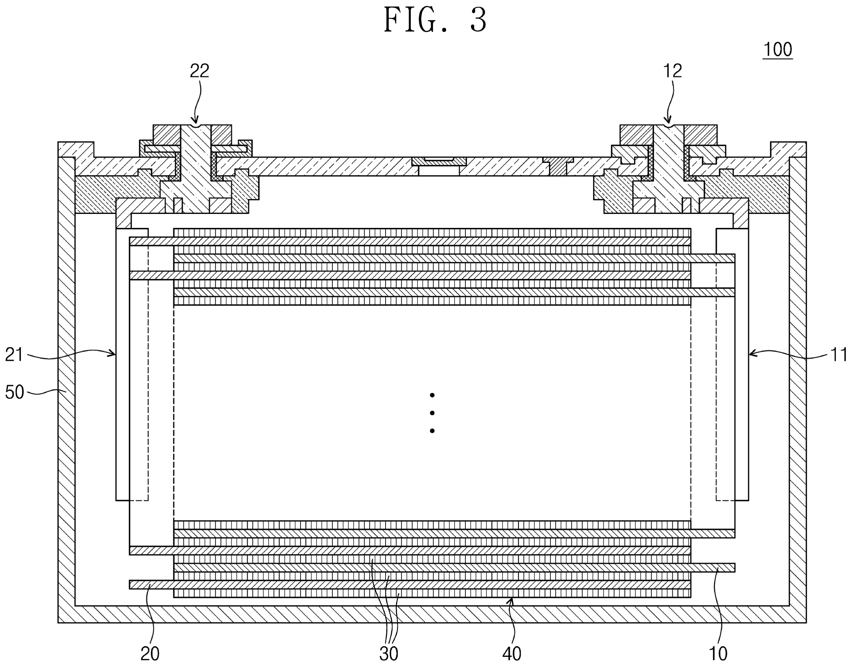

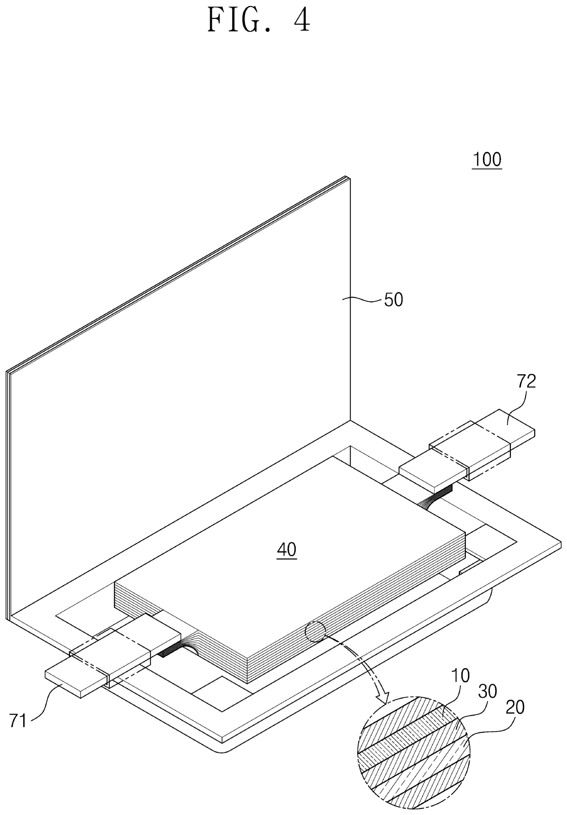

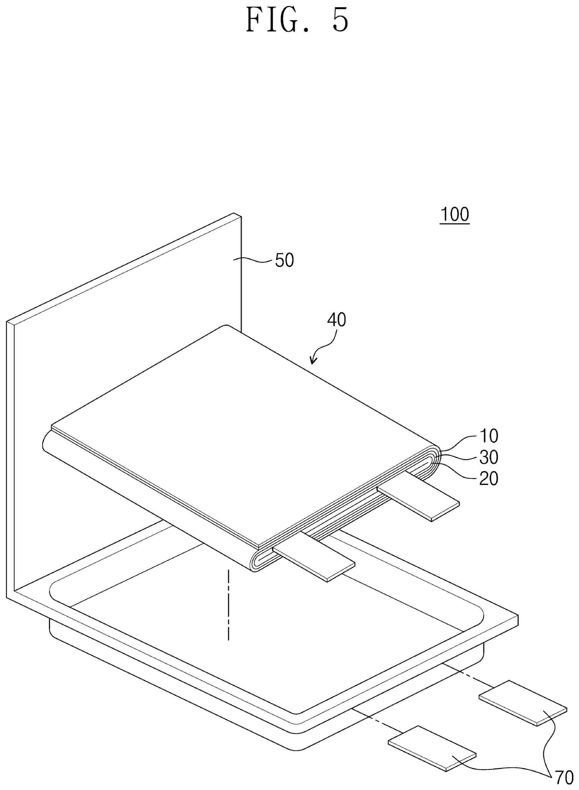

The rechargeable lithium battery may be classified into cylindrical, prismatic, pouch, or coin-type batteries, and the like depending on the shape. FIGS. 2 to 5 are schematic diagrams illustrating rechargeable lithium batteries according to example embodiments. FIG. 2 illustrates a cylindrical battery, FIG. 3 illustrates a prismatic battery, and FIGS. 4 and 5 illustrate pouch-type batteries. Referring to FIGS. 2 to 4, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In addition, in FIG. 3, the rechargeable lithium battery 100 may include a positive lead tab 11, a positive terminal 12, a negative lead tab 21, and a negative terminal 22. As illustrated in FIGS. 4 and 5, the rechargeable lithium battery 100 may include an electrode tab 70 illustrated in FIG. 5, or, for example, a positive electrode tab 71 and a negative electrode tab 72 illustrated in FIG. 4, the electrode tabs 70/71/72 forming an electrical path for inducing the current formed in the electrode assembly 40 to the outside.

The rechargeable lithium battery according to an example embodiment of the present disclosure may be applicable to automobiles, mobile phones, and/or various types of electric devices, as non-limiting examples.

Hereinafter, the present disclosure is explained in more detail referring to Examples. However, the Examples are only illustrations for explaining the present disclosure, and the scope of the present disclosure is not limited thereto.

### Example 1

### Manufacture of Negative Electrode Slurry

Single-walled carbon nanotubes (SWCNTs, average length: $\geq 1\ \mu m$ to $\leq 10\ \mu m$, diameter: $\geq 1\ nm$ to $\leq 3\ nm$, aspect ratio: $\geq 330$ to $\leq 10,000$) were dispersed in an organic solvent, NMP, at a concentration of about 1 wt% to prepare an organic dispersion including carbon nanotubes. TPB (Phenoxy PKHA, GABRIEL) was additionally added to the SWCNT/NMP dispersion prepared to prepare a mixture. The carbon nanotubes and phenoxy resin-containing organic dispersion were mixed with a silicon-based active material and dispersed at about 120°C and about 60 rpm, and then the organic solvent was removed and dried to prepare a first negative electrode active material precursor in a powder form (S100). The silicon-based active material is a composite including a core including artificial graphite and silicon particles; and a soft carbon coated on the surface of the core.

The first negative electrode active material precursor prepared was pulverized using a ball mill to prepare a first negative electrode active material. In this case, 20 g of the first negative electrode active material precursor and 100 g of a ball (3 mm, Zirconia) were added and milling was performed using a 2D milling device, HBM-mini 3RC (HANtech), at about 200 rpm for about 24 hours. The average particle diameter (D50) of the first negative electrode active material is about 10 $\mu m$ (S300).

The first negative electrode active material, a second negative electrode active material obtained by mixing natural graphite and artificial graphite, carbon black (CB) as a conductive material, styrene butadiene rubber (SBR) as a binder, carboxymethyl cellulose (CMC) as a thickener, and a dispersant were mixed in a water solvent to prepare a negative electrode slurry (S500).

The content of each material in the mixing process is shown in Table 1 below. Table 1 below describes the content of each material in % by weight relative to the total weight of the negative electrode slurry solid content. In addition, Table 1 is the solid content of each material in the negative electrode slurry, so the solid content was substantially the same as the content of each material in the negative electrode active material layer manufactured using the negative electrode slurry.

### Example 2

A negative electrode slurry was manufactured in the same manner as in Example 1, with a difference that the first negative electrode active material was prepared by milling at about 160 rpm for about 2 hours using a 3D milling device, KMC-T2 (Korea Machine Engineering Co., Ltd.).

### Example 3

A negative electrode slurry was manufactured in the same manner as in Example 1, with a difference that the amounts of the first negative electrode active material and the second negative electrode active material were changed. The amounts of the first negative electrode active material and the second negative electrode active material of Example 3 are shown in Table 1 below.

### Example 4

A negative electrode slurry was manufactured in the same manner as in Example 3, with a difference that the balls used for milling during manufacturing the first negative electrode active material (S300) were mixed in sizes of about 3 mm and about 10 mm. In this case, the balls were mixed in sizes of about 3 mm and about 10 mm at a weight ratio of about 3:7.

### Example 5

The same method as Example 2 was used for the manufacture, with a difference that the amounts of the first negative electrode active material and the second negative electrode active material were changed. The amounts of the first negative electrode active material and the second negative electrode active material of Example 5 are shown in Table 1 below.

### Example 6

The negative electrode slurry was manufactured in the same manner as Example 4, with a difference that the first negative electrode active material was prepared by milling at about 160 rpm for about 2 hours using a 3D milling machine, KMC-T2 (Korea Machine Engineering Co., Ltd.).

### Example 7

A negative electrode slurry was manufactured in the same manner as in Example 3, with a difference that the size of the balls used for milling for the preparation of the first negative electrode active material (S300) was about 5 mm.

### Example 8

A negative electrode slurry was manufactured in the same manner as in Example 7, with a difference that the first negative electrode active material was prepared by milling at about 160 rpm for about 2 hours using a 3D milling device, KMC-T2 (Korea Machine Engineering Co., Ltd.).

### Example 9

A negative electrode slurry was manufactured in the same manner as in Example 5, with a difference that the size of the alumina balls used for milling for the preparation of the first negative electrode active material (S300) was about 3 mm.

### Comparative Example 1

Unlike Example 1, the first negative electrode active material was not prepared separately, but single-walled carbon nanotubes (SWCNTs) and a silicon-based active material were mixed with a second negative electrode active material, carbon black (CB), styrene butadiene rubber (SBR), carboxymethyl cellulose (CMC), and a dispersant in water to manufacture a negative electrode slurry.

### Comparative Example 2

A negative electrode slurry was manufactured in the same manner as Example 1, with a difference that the ball mill process was excluded.

Hereinafter, Table 1 describes the content of each component of Examples 1 to 9 and the Comparative Examples described above, and Table 2 below is a table summarizing the preparation method thereof.

Table 1:

| | Negative electrode slurry/negative electrode active material layer | | | | | | | | |
| | Active material [wt%] | | | Conductive material | | SBR [wt%] | CMC [wt%] | TPB [wt%] | Dispersant [wt%] |
| | Graphite | | Silicon-based active material | SWCNT [wt%] | CB [wt%] | | | | |
| | Artificial | Natural | | | | | | | |
| Comparative Example 1 | 44.071 | 44.071 | 8.82 | 0.035 | 0.45 | 1.7 | 0.8 | - | 0.053 |
| Comparative Example 2 | 44.079 | 44.079 | 8.81 | 0.025 | | | | 0.02 | 0.037 |
| Example 1 | 44.066 | 44.066 | 8.81 | 0.035 | | | | | 0.053 |
| Example 2 | | | | | | | | | |
| Example 3 | 46.531 | 46.531 | 3.88 | | | | | | |
| Example 4 | | | | | | | | | |
| Example 5 | | | | | | | | | |
| Example 6 | | | | | | | | | |
| Example 7 | | | | | | | | | |
| Example 8 | | | | | | | | | |
| Example 9 | | | | | | | | | |

Table 2:

| | Ball mill method | | |
| | Milling conditions | Ball size | Ball type |
| Comparative Example 1 | X | | |
| Comparative Example 2 | X | | |
| Example 1 | 2D | 3 mm | Zirconia |
| Example 2 | 3D | 3 mm | |
| Example 3 | 2D | 3 mm | |
| Example 4 | 2D | 3 mm: 10 mm = 3: 7 | |
| Example 5 | 3D | 3 mm | |
| Example 6 | 3D | 3 mm: 10 mm = 3: 7 | |
| Example 7 | 2D | 5 mm | |
| Example 8 | 3D | 5 mm | |
| Example 9 | 3D | 3 mm | Alumina |

## Fabrication of Rechargeable lithium Battery

The negative electrode slurry of the Example or Comparative Example was applied to a copper foil current collector, dried, and rolled to manufacture a negative electrode for a rechargeable lithium battery, in which a negative electrode active material layer was formed on the negative electrode current collector.

A half cell was fabricated using the negative electrode, a polyethylene/polypropylene separator, a lithium metal positive electrode, and an electrolyte. The electrolyte used a mixed solution of ethylene carbonate, ethyl methyl carbonate, and dimethyl carbonate (volume ratio of about 20:10:70) in which 1.5 M $LiPF_6$ was dissolved.

**Experimental Example 1 - Measurement of Life Characteristics**

The life characteristics of rechargeable lithium batteries including negative electrodes manufactured using the negative electrode slurries of Examples 1 to 9 and Comparative Examples 1 and 2 were evaluated.

The rechargeable lithium battery was charged at room temperature (25°C) at a constant current of about 0.1 C and a cut-off voltage of about 4.25 V, and then charged at a constant voltage while maintaining about 4.25 V until the current reached about 0.05 C, and then discharged at a constant current of about 0.1 C until the voltage reached about 2.8 V, so as to perform a formation process.

The standard steps of charging the battery subjected to the formation process at a constant current of about 0.2 C until the voltage reached about 4.25 V, charging at a constant voltage while maintaining about 4.25 V until the current reached about 0.05 C, and then discharging at a constant current of about 0.2 C until the voltage reached about 2.8 V were performed. In this case, the charge capacity and discharge capacity were measured.

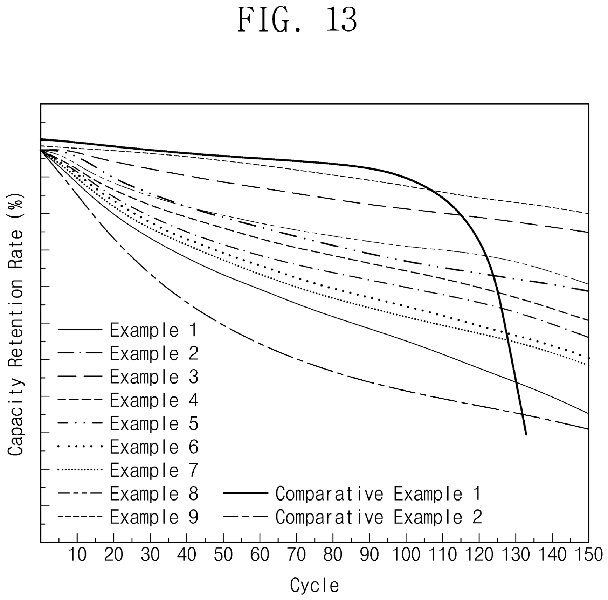

The rechargeable lithium battery that went through the formation step and standard step was charged at a constant current of about 1 C at about 25 °C until the voltage reached about 4.25 V, and then charged at a constant voltage until the current reached about 0.05 C while maintaining about 4.25 V. Then, the discharge cycle of discharging at a constant current of about 1 C until the voltage reached about 2.8 V was repeated 150 times. In this case, the capacity retention rate of each cycle was obtained as in Equation 1 below, and the capacity retention rate of each cycle is shown as a graph in FIG. 13.

Capacity retention rate (%) = (discharge capacity at the nth cycle/ discharge capacity at the 1st cycle) $\times$ 100.  　　　　Equation 1

In Equation 1 above, n is an integer in a range of 1 to 150.

As a result, in the case of Examples 1 to 9, it was observed that the capacity retention rate was desired or improved even after the 150th cycle.

On the other hand, in the case of Comparative Example 1, which used the same materials as in the Examples but mixed and used without a special process, it was confirmed that the capacity retention rate decreased rapidly after the 120th cycle. This is because in the case of the Examples, the carbon nanotubes used as the conductive material are distributed only on the surface of the silicon-based active material, excluding the graphite, which is the second negative electrode active material, so that the energy density and conductivity of the negative electrode active material layer increase, but in the case of Comparative Example 1, where the carbon nanotubes are distributed on both surfaces of the first and second negative electrode active materials, the energy density or conductivity decreases.

In addition, in the case of Comparative Example 2, where the first negative electrode active material was manufactured similarly to the Examples but the milling process was excluded, it was confirmed that the capacity retention rate was somewhat low even though operated up to the 150th cycle. When the milling process is excluded, the first negative electrode active material precursor is mixed into the slurry in a state where the first negative electrode active material precursor exists in an agglomerated form of the first negative electrode active materials, so coating quality deteriorates during manufacturing the negative electrode, and the capacity retention rate may be low due to the characteristic. Evaluation Example 2 was conducted below for confirmation.

**Evaluation Example 2 - Coating Evaluation**

In case of manufacturing a negative electrode using each negative electrode slurry of the Examples and Comparative Examples, the negative electrode slurry is applied to a copper foil current collector, dried, and then rolled. In this case, the negative electrode thicknesses before and after rolling are compared and shown in Table 3 below. The values in Table 3 are average values obtained after repeating the process 10 times. In addition, FIG. 14 shows photographs showing the surfaces of the negative electrodes after rolling.

Table 3:

|  | Before rolling ($\mu$m) | After rolling ($\mu$m) | Thickness difference ($\mu$m) |
|---|---|---|---|
| Comparative Example 1 | 119.3 | 80.8 | 38.5 |
| Comparative Example 2 | 122.5 | 82.3 | 40.2 |
| Example 5 | 119.9 | 81.0 | 37.9 |
| Example 9 | 119.0 | 80.7 | 38.3 |

Referring to Table 3 above, in the case of Comparative Example 2, which excluded the milling process, it can be observed that the thickness before and after rolling is greater than other negative electrodes. In addition, referring to FIG. 14, in the case of Comparative Example 2, it was observed that scratches were formed on the surface of an electrode plate after rolling. This is judged to be a phenomenon that occurs because, when the pulverizing process through the ball mill is not performed, the first negative electrode active material precursors, which are in a tangled form, are coated on the negative electrode active material layer, resulting in an uneven surface.

The negative electrode manufactured using the negative electrode slurry according to the present disclosure may have high energy density and desired or improved electrical conductivity. In addition, a rechargeable lithium battery including the negative electrode may have desired or improved capacity, charge and discharge efficiency, and life characteristics.

Although the example embodiments of the present disclosure have been described with reference to attached drawings, the present disclosure may be implemented in other specific forms without changing the technical idea or essential features thereof. Therefore, it should be understood that the example embodiments described above are illustrations in all aspects and not limiting.

## Claims

1. A negative electrode slurry comprising:

   a first negative electrode active material (SC) comprising a silicon composite; and
   a second negative electrode active material (GPH) which is a carbon-based material,
   wherein the silicon composite comprises a silicon-based active material (SP) and a one-dimensional carbon nanostructure (CNS),
   the one-dimensional carbon nanostructure (CNS) is fixed in a dispersed form on a surface of the silicon-based active material (SP), and
   the second negative electrode active material (GPH) is a carbon-based material that is different from the one-dimensional carbon nanostructure (CNS).

2. The negative electrode slurry of claim 1, wherein the one-dimensional carbon nanostructure (CNS) is omitted on a surface of the second negative electrode active material (GPH) so that the carbon-based material is exposed.

3. The negative electrode slurry of claim 1 or 2, wherein an average particle diameter (D50) of the first negative electrode active material (SC) is in a range of $\geq 1$ $\mu$m to $\leq 30$ $\mu$m.

4. The negative electrode slurry according to any one of claims 1 to 3, wherein the one-dimensional carbon nanostructure (CNS) comprises at least one of carbon nanotubes (CNTs), carbon nanofibers (CNFs), graphene nanoribbons (GNRs), carbon nano belts, and carbon nano rods.

5. The negative electrode slurry according to any one of claims 1 to 4,

   wherein the silicon composite further comprises a thermoplastic binder (S100), and
   the one-dimensional carbon nanostructure (CNS) is fixed on the surface of the silicon-based active material (SP) via the thermoplastic binder (S100).

6. The negative electrode slurry according to any one of claims 1 to 5, wherein the content of the one-dimensional carbon nanostructure (CNS) is in a range of $\geq 0.05$ wt% to $\leq 3$ wt% relative to a total weight of the first negative electrode active material (SC).

7. The negative electrode slurry according to any one of claims 1 to 6, wherein the silicon composite further comprises a thermoplastic binder (S100), and

   the one-dimensional carbon nanostructure (CNS) is fixed on the surface of the silicon-based active material (SP) via the thermoplastic binder (S100),
   wherein the content of the thermoplastic binder (S100) is in a range of $\geq 0.05$ wt% to $\leq 3$ wt% relative to a total weight of the first negative electrode active material (SC).

8. The negative electrode slurry according to any one of claims 1 to 7, wherein a weight ratio of the first negative electrode active material (SC) to the second negative electrode active material (GPH) is in a range of about 1:50 to about 1:5.

9. A method of manufacturing a negative electrode slurry, the method comprising:

preparing a first negative electrode active material (SC) precursor comprising a silicon-based active material (SP), a one-dimensional carbon nanostructure (CNS), and a thermoplastic binder (S100);
pulverizing the first negative electrode active material (SC) precursor to prepare a first negative electrode active material (SC); and
mixing the first negative electrode active material (SC) and a second negative electrode active material (GPH), wherein the first negative electrode active material (SC) comprises a silicon composite in which the one-dimensional carbon nanostructure (CNS) is fixed on a surface of the silicon-based active material (SP) via the thermoplastic binder (S100), and
the second negative electrode active material (GPH) comprises a carbon-based material that is different from the one-dimensional carbon nanostructure (CNS).

10. The method of manufacturing a negative electrode slurry of claim 9, wherein the first negative electrode active material (SC) precursor comprises an agglomeration of multiple silicon composites.

11. The method of manufacturing a negative electrode slurry of claim 9 or 10, wherein the pulverizing is performed using balls having a diameter in a range of $\geq 0.1$ mm to $\leq 30$ mm.

12. The method of manufacturing a negative electrode slurry according to any one of claims 9 to 11, wherein the pulverizing is performed for a duration in a range of $\geq 30$ minutes to $\leq 48$ hours.

13. The method of manufacturing a negative electrode slurry according to any one of claims 9 to 12, wherein a weight ratio of balls and the first negative electrode active material (SC) precursor during the pulverizing is in a range of about 2:1 to about 8:1.

14. The method of manufacturing a negative electrode slurry according to any one of claims 9 to 13, wherein the first negative electrode active material (SC) and the second negative electrode active material (GPH) are mixed in a weight ratio in a range of about 1:50 to about 1:5.

15. A negative electrode comprising:

a negative electrode current collector; and
a negative electrode active material layer (AML2) on the negative electrode current collector,
wherein the negative electrode active material layer (AML2) comprises a first negative electrode active material (SC) comprising a silicon composite, and a second negative electrode active material (GPH) comprising a carbon-based material,
the silicon composite comprises a silicon-based active material (SP) and a one-dimensional carbon nanostructure (CNS),
the one-dimensional carbon nanostructure (CNS) is fixed in a dispersed form on a surface of the silicon-based active material (SP), and
the second negative electrode active material (GPH) comprises a carbon-based material that is different from the one-dimensional carbon nanostructure (CNS).

# FIG. 1

ELL

Li⁺

AML1 COL1     30     AML2 COL2

10             20

# FIG. 2

# FIG. 3

EP 4 738 464 A1

# FIG. 4

# FIG. 5

# FIG. 6

# FIG. 7

# FIG. 8

GPH

CNS

SP

# FIG. 9

SP

CNS

GPH

PSC

# FIG. 10

SC

SP

CNS

# FIG. 11

PSC

SP

CNS

# FIG. 12

Start

Prepare first negative electrode precursor PSC ⟶ S100

Prepare first negative electrode active material SC ⟶ S300

Manufacture negative electrode slurry including first negative electrode active material SC and second negative electrode active material GPH ⟶ S500

End

# FIG. 13

# FIG. 14

| Comparative Example 1 | Comparative Example 2 | Example 5 | Example 9 |
|---|---|---|---|
| | | | |

# EUROPEAN SEARCH REPORT

**Application Number**

EP 25 21 0600

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 966 653 B (NINGDE AMPEREX TECHNOLOGY LTD) 21 July 2023 (2023-07-21) * paragraphs [0004], [0006], [0046], [0066] - [0071], [0074], [0089] - [0101], [0109]; figures 1, 2 * ----- | 1-7, 9-13,15 | INV.<br>H01M4/36<br>H01M4/133<br>H01M4/134<br>H01M4/38 |
| X | EP 4 131 499 A1 (NINGDE AMPEREX TECHNOLOGY LTD [CN]) 8 February 2023 (2023-02-08) * paragraphs [0032], [0045], [0046]; claims 1-12; figure 1; table 5 * ----- | 1-15 | H01M4/62<br>H01M4/04<br>H01M4/587 |
| A | WO 2019/052572 A1 (JIANGSU DAOYING TECH CO LTD [CN]) 21 March 2019 (2019-03-21) * the whole document * ----- | 1-15 | |

**TECHNICAL FIELDS SEARCHED (IPC)**

H01M

The present search report has been drawn up for all claims

| Place of search | Date of completion of the search | Examiner |
|---|---|---|
| The Hague | 18 February 2026 | Di Berardino, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 0600

This annex lists the patent family members relating to the patent documents cited in the above-mentioned European search report.
The members are as contained in the European Patent Office EDP file on
The European Patent Office is in no way liable for these particulars which are merely given for the purpose of information.

18-02-2026

| Patent document cited in search report | | Publication date | Patent family member(s) | | Publication date |
|---|---|---|---|---|---|
| CN 115966653 | B | 21-07-2023 | NONE | | |
| EP 4131499 | A1 | 08-02-2023 | CN | 113728471 A | 30-11-2021 |
| | | | EP | 4131499 A1 | 08-02-2023 |
| | | | US | 2023042519 A1 | 09-02-2023 |
| | | | WO | 2021195913 A1 | 07-10-2021 |
| WO 2019052572 | A1 | 21-03-2019 | CA | 3035900 A1 | 18-03-2019 |
| | | | CN | 107658450 A | 02-02-2018 |
| | | | JP | 7030119 B2 | 04-03-2022 |
| | | | JP | 2019536246 A | 12-12-2019 |
| | | | KR | 20190086008 A | 19-07-2019 |
| | | | US | 2020058921 A1 | 20-02-2020 |
| | | | WO | 2019052572 A1 | 21-03-2019 |

EPO FORM P0459

For more details about this annex : see Official Journal of the European Patent Office, No. 12/82

**REFERENCES CITED IN THE DESCRIPTION**

**Patent documents cited in the description**

- KR 1020240149715